# EUROPÄISCHE PATENTSCHRIFT

(11) **EP 1 745 899 B1**
(45) Veröffentlichungstag und Bekanntmachung des Hinweises auf die Patenterteilung: **24.09.2008**
(21) Anmeldenummer: 06114886.2
(22) Anmeldetag: 02.06.2006
(51) Int. Cl.: B27C 3/06, B27M 3/00, B32B 7/08, B32B 21/10, E04C 2/12

(54) **Verfahren und Vorrichtung zum Herstellen eines Schichtverbundelements**
Method and apparatus for manufacturing a laminated element
Procédé et dispositif de fabrication d'un élément stratifié

(30) Priorität: 19.07.2005 CH 11982005; 07.09.2005 CH 14612005
(43) Veröffentlichungstag der Anmeldung: 24.01.2007
(73) Patentinhaber: Techno Wood GmbH, 9658 Wildhaus (CH)
(72) Erfinder: Wirz, Felix, 9426 Lutzenberg (CH); Zimmermann, Anton, 6374 Buochs (CH); Nägeli, Johannes, 9056 Gais (CH); Steinmann, Urs, 9658 Wildhaus (CH)
(74) Vertreter: Wenger, René

(56) Entgegenhaltungen:
- EP-A- 1 302 693
- EP-A1- 0 163 781
- WO-A-00/03850
- DE-A1- 3 906 916
- FR-A- 2 301 441

## Beschreibung

Die Erfindung betrifft ein Verfahren und eine Vorrichtung zum Herstellen eines Schichtverbundelements. Ein Schichtverbundelement besteht im Wesentlichen aus mehreren Lagen von miteinander verbundenen Bauelementen. Derartige Schichtverbundelemente werden in der Praxis vorzugsweise als Wand-, Decken- oder Dachelemente für Gebäude eingesetzt. Dabei hat sich gezeigt, dass Bauelemente aus nachwachsenden Rohstoffen, insbesondere Hölzer, besonders als Bauelemente geeignet sind. Vorteilhafte Ausführungen von Schichtverbundelementen weisen wenigstens zwei benachbarte Lagen mit Hölzern unterschiedlicher Richtungen auf. Zur Verbindung der Lagen sind die Hölzer mit Dübeln durchsetzt.

Ein vergleichbares Schichtverbundelement ist aus der EP 1 097 032 bekannt geworden, das ein einstofflich aufgebautes Schichtholzelement zeigt, das durch Dübel aus Holz zusammengehalten ist. Für die Herstellung des Schichtholzelements werden die Dübel stärker getrocknet als die Hölzer der Lagen, wodurch die Hölzer nach der Verdübelung durch Feuchteausgleich Wasser vom umgebenden Holz aufnehmen. In der Praxis hat sich gezeigt, dass ein solcher Herstellungsprozess schwierig in der Handhabung sein kann. Das Schichtholzelement kann auch die hohen Anforderungen an die Qualität der Dübelverbindung schwer oder nicht immer mehr erfüllen.

Durch die EP 163 781, auf der der Oberbegriff der unabhängigen Ansprüche basiert, ist ein Verfahren und eine Vorrichtung zum Herstellen von vorgespannten Schichtholzträgern bekannt geworden. Die einzelnen Schichten werden auf einer Lehre in gekrümmter Lage vorgespannt und mit Schraubzwingen fixiert. Mittels einer fahrbaren Pressvorrichtung können die Schichten bei jeder Schraubzwinge zusammen gepresst werden. Mittels einer ebenfalls fahrbaren Bohrvorrichtung können in die gekrümmten und eingespannten Brettschichten Bohrlöcher für Dübel gebohrt werden.

Die EP1 302 603 betrifft ein Massivholzelement und Verfahren zu dessen Herstellung. Dabei werden Dreiecklamellen im Sternschnittverfahren aus runden Stammabschnitten gewonnen und zu quaderförmigen Blöcken zusammen gelegt. Die Blöcke sind mit Dübelstäben durchsetzt, welche in seitenversetzten Bohrungen eingeführt werden.

Es ist deshalb eine Aufgabe der vorliegenden Erfindung, die Nachteile des Bekannten zu vermeiden, insbesondere also ein Verfahren zum Herstellen eines Schichtverbundelements zu schaffen, das einfach handhabbar ist. Das Verfahren soll weiter eine hohe Prozesssicherheit gewährleisten.

Diese Aufgaben werden mit einem Verfahren mit den Merkmalen im Anspruch 1 gelöst. Durch die Aufrechterhaltung der Pressung der Lagen beim Bohrvorgang und beim Einsetzen des Dübels wird erreicht, dass eine präzise Positionierung der Dübel sichergestellt ist bzw. bleibt. Fehlstellungen von Bauelementen können so ausgeschlossen werden. Als Bauelemente kommen insbesondere Hölzer, andere nachwachsende Rohstoffe wie Bambus, oder cellulosehaltige oder holzartige Werkstoffe in Frage. Denkbar wären aber auch beispielsweise Bauelemente aus Faserverbundwerkstoffen, Kunststoffen oder anderen geeigneten Materialien. Aus ökologischen Gründen ist es besonders vorteilhaft, wenn Dübel aus Holz verwendet werden. Dabei sind Dübel aus einem Hartholz besonders geeignet.

Das Verfahren lässt sich besonders effizient betreiben, weil jeweils eine Gruppe von wenigstens zwei Bohrlöchern gebohrt und Pressung aufrecht erhalten wird. Es ist ausserdem vorteilhaft, dass der Pressvorgang mittels einer Pressanordnung durchgeführt wird, die zum sequentiellen Pressen von einer Gruppe zur nächsten Gruppe bewegt wird. Die Produktivität kann durch diesen Verfahrensablauf weiter verbessert werden.

Die vorgenannten Arbeitsschritte, insbesondere der Bohrvorgang und das Einsetzen des Dübels, erfolgen bevorzugt von oben nach unten (bzw. in vertikaler Richtung). Selbstverständlich wäre es aber auch vorstellbar, diese Arbeitschritte in umgekehrter Richtung auszuführen. So wäre es beispielsweise bei einem Bohrvorgang von unten nach oben möglich, dass die entstehenden Späne auf besonders einfache Art und Weise unter Ausnutzung der Schwerkraft aus dem Bohrloch wegführbar wären.

Vorteilhaft kann es sein, wenn vor dem Einsetzen des Dübels in das Bohrloch der Dübel im Durchmesser mechanisch verdichtet wird. Ein derart komprimierter Dübel kann somit auf einfache Art und Weise in das Bohrloch eingesetzt werden. Bedingt durch das Rückstellvermögen - insbesondere bei der Verwendung von Holzdübeln - quillt das Material im Bohrloch wieder auf und verspannt sich kraftschlüssig. Durch geeignete Wahl der Verdichtungsparameter kann ein gewünschter Kraftschluss auf einfache Art und weise eingestellt werden. Die Verdichtung kann mittels Kompressionseinrichtungen auf verschiedene Arten erfolgen. Beispielsweise kann der Dübel zwischen Rollen oder Walzen (Presswalzen) hindurchgeführt werden, wodurch eine mechanische Verdichtung im Durchmesser erreichbar ist. Der Dübel könnte aber auch durch eine Matrize gestossen werden.

Die Dübel können beim Verdichtungsvorgang zusätzlich mit einer Profilierung versehen werden.

Die Dübel können beim Verdichtungsvorgang zusätzlich mit einer Profilierung versehen werden.

Besonders vorteilhaft kann es sein, wenn der Dübel vor dem Einsetzen in das Bohrloch mit einem Fluidum beaufschlagt wird. Als Fluidum kann beispielsweise ein Gleitmittel eingesetzt werden, das wegen der Reduktion der Reibung beim Einpressen die Einführung der Dübel erleichtert. Weiter kann so eine Schubverformung reduziert werden. Als Fluidum besonders geeignet ist dabei Wasser. Das Wasser oder ein anderes Quellmittel könnten zusätzlich mit verschiedenen Zusatzstoffen versehen sein kann. Als Zusatzstoffe könnten beispielsweise Haftmittel, und/oder Gleitmittel verwendet werden. Auch Lösungsmittel (anstatt Wasser) wie beispielsweise Ameisensäure zum Anlösen eines Holzdübels wären vorstellbar. Das Fluidum kann Haftmittel enthalten, die die Verbindungswirkung der Dübel und insbesondere deren Auszugswerte weiter erhöhen können. Als Haftmittel kommen beispielsweise Leime, auf natürlichen Stoffen basierende Haftmittel wie Harz, Melasse, Stärke, Kasein, Gluten etc. in Betracht. Auch eine Verleimung mit holzeigenem Lignin ist vorstellbar.

Die Beaufschlagung der Dübel mit dem Fluidum kann vor oder gleichzeitig mit dem Verdichtungsvorgang erfolgen. Vorteile können sich jedoch insbesondere ergeben, wenn der Dübel unmittelbar nach dem Verdichtungsvorgang beaufschlagt wird.

Der Verdichtungsvorgang und die Beaufschlagung des Dübels mit dem Fluidum kann auf vorteilhafte Art und Weise mit dem Vorgang des Einsetzens des Dübels in das Bohrloch kombiniert werden. Wenn ein Dübel mittels eines Stössels durch einen Stossvorgang in das Bohrloch eingesetzt wird, so kann bei diesem Stossvorgang der Dübel verdichtet und/oder mit dem Fluidum beaufschlagt werden.

Je nach Bedürfnis können für das Verfahren verschiedenartig gebildete Gruppen gewählt werden. So könnte beispielsweise eine Gruppe durch clusterartig verteilte Verbindungsstellen gebildet sein. Vorteilhaft ist es jedoch, wenn die Gruppen durch quer zu einer Arbeitsflächen-Längsrichtung verlaufende, nebeneinander angeordnete Reihen von Verbindungsstellen gebildet sind. Durch eine solche reihenweise Ausgestaltung der Verfahrensschritte vereinfacht sich der Verfahrensablauf zum Herstellen insbesondere von sich auf der Arbeitsfläche in Längsrichtung erstreckenden Schichtverbundelementen wesentlich. Quer bzw. Querrichtung bedeutet hier eine Richtung auf der Arbeitsfläche, die zur Längsrichtung einen Winkel bildet. Besonders bevorzugt verläuft die Querrichtung im rechten Winkel zur Längsrichtung. Eine Reihe kann als Linie betrachtet werden, auf welcher verbindungsstellen angeordnet sind.

Zum Erzeugen von reihenweisen Verbindungsstellen können die ausgelegten Lagen mit Hilfe einer sich quer zur Arbeitsflächen-Längsrichtung erstreckenden Pressanordnung zusammengepresst werden, unter Aufrechterhaltung der Pressung in die Reihe Bohrlöcher gebohrt und Dübel eingesetzt werden. Die Pressung kann dann aufgelöst werden. Danach kann die Pressanordnung zur nachfolgenden Reihe verschoben werden und die vorgenannten Bearbeitungsschritte (Pressen, Bohren, Dübel einsetzen) können wiederholt werden.

Ein Bohrloch kann durchgehend durch die Lagen gebohrt werden (Durchgangsloch). Als Bohrloch kann aber auch ein Sackloch gebohrt werden, wodurch die Dübel eine aussen liegende Lage nur teilweise durchdringen. Dies hat einerseits den Vorteil, dass auf diese Weise eine optisch hochwertige Gutseite am Schichtverbundelement gewonnen wird. Anderseits kann auf diese Weise auch die Arbeitsfläche geschont werden, da bei Durchgangslöchern ein Eingriff durch Anbohren der Arbeitsfläche unvermeidbar wäre. Auswechselbare Verschleissplatten zur Bildung der Arbeitsfläche wären somit unnötig.

Wenigstens eine Reihe kann mit schräg verlaufenden Dübeln versehen sein. Auf diese Weise wird ein zusätzlicher Formschluss erreicht. Besonders vorteilhaft ist es, wenn in wenigstens zwei benachbarten Reihen Dübel mit unterschiedlichen Richtungen eingesetzt werden.

Der Pressdruck sollte vorzugsweise gleichmässig über die gesamte sich in Querrichtung erstreckende Breite des Schichtverbundelements verteilt sein. Für eine gleichmässige Kraftverteilung können hierzu auf der Pressanordnung angeordnete Kompensationsmittel dienen. Als Kompensationsmittel zum Ausgleich unterschiedlicher Höhen der Lagen über die Breite könnten beispielsweise Kissen oder Schläuche (z.B. Gummischläuche) verwendet werden, die sich auf der Pressanordnung in Querrichtung erstrecken.

Ein weiterer Aspekt der Erfindung betrifft eine Vorrichtung zum Herstellen eines Schichtverbundelements, insbesondere eine Vorrichtung zur Durchführung des oben beschriebenen Verfahrens. Die Vorrichtung weist zum Zusammenpressen der Lagen gegen eine Arbeitsfläche eine Pressanordnung auf, mit welcher die gesamte Breite des Schichtverbundelements einem Pressdruck unterwerfbar ist, wobei sich die Pressanordnung vorzugsweise quer zur Arbeitsflächen-Längsrichtung erstreckt. Weiterhin weist die Vorrichtung wenigstens eine Bohreinheit mit einem Bohrkopf zum Bohren von Bohrlöchern sowie wenigstens eine Dübeleinheit mit einem Stössel zum Einsetzen von Dübeln in die Bohrlöcher auf. Die Breite ist dabei vorzugsweise durch eine rechtwinklig zur Längsrichtung verlaufende Querrichtung vorgegeben.

Die Bohreinheit und die Dübeleinheit sind in Querrichtung verschiebbar auf der Pressanordnung angeordnet. Auf diese Weise können Bohreinheit und Dübeleinheit zur Pressanordnung einfach positioniert werden.

Die Pressanordnung ist mittels eines Verschiebemechanismus in der Arbeitsflächen-Längsrichtung verschiebbar. Die Führung der Pressanordnung kann auf in Längsrichtung verlaufenden Längsschienen erfolgen. Eine solche Anordnung gewährleistet, dass auch vergleichsweise grosse Schichtverbundelemente oder mehrere nebeneinander liegende Schichtverbundelemente mit der gleichen Vorrichtung bearbeitet bzw. hergestellt werden können.

Die Dübeleinheit kann derart verschiebbar auf der Pressanordnung angeordnet sein, dass das Dübelaggregat über eine zuvor von der Bohreinheit erzeugtes Bohrloch verschiebbar ist.

Die Dübeleinheit kann eine Kompressionseinrichtung zum mechanischen Verdichten der Dübel im Durchmesser aufweisen. Vorzugsweise ist dabei die Dübeleinheit derart ausgestaltet, dass der Stössel durch die Kompressionseinrichtung durchführbar ist, wodurch der Kompressions- bzw. Verdichtungsvorgang auf einfache Art und Weise in den Verdübelungsvorgang integriert werden kann.

Die Kompressionseinrichtung kann wenigstens zwei Presswalzen aufweisen, deren Drehachsen rechtwinklig (oder eventuell auch schräg) zur Dübelrichtung verlaufen (können), wobei die Dübel zwischen Presswalzen hindurchführbar sind. Vorzugsweise werden jedoch drei oder besonders bevorzugt vier Presswalzen verwendet. Im Falle der vier Presswalzen stehen jeweils zwei Presswalzen einander gegenüber, die in der Draufsicht eine rechtwinklige Kreuzkonfiguration ausbilden.

Die Presswalzen können Walzenstirnseiten aufweisen, die korrespondierend zu den verwendeten Dübeln konvex gekrümmt ausgebildet sind. Die Krümmung entspricht also vorzugsweise dem Dübelradius. Auf den Walzenstirnseiten bzw. Mantelflächen der Presswalzen können Rippen angeordnet sein, welche an der Dübeloberfläche Rillen verursachen. Die Rippen können parallel auf der Walzenstirnseite angeordnet sein. Selbstverständlich sind je nach gewünschter Profilierung auf den Dübeloberflächen auch andere Rippengestaltungen vorstellbar.

Die Dübeleinheit kann eine Auftrageinrichtung zum Beaufschlagen der Dübel mit einem Fluidum aufweisen. Das Fluidum kann eine flüssige oder pastöse Form haben. Je nach Anwendungszweck kann das Fluidum ein Gleitmittel und/oder Haftmittel sein.

Die Auftrageinrichtung kann Sprühdüsen enthalten, die vorzugsweise auf einem Ring angeordnet sind. Durch die ringförmige Anordnung der Sprühdüsen kann die gesamte Oberfläche der Dübel besonders einfach besprüht werden. Hervorragende Auftragresultate ergibt ein scheibenförmiges Auftragelement (als Auftrageinrichtung) mit einer Einführöffnung zum Hindurchführen der Dübel. In der Einführöffnung ist wenigstens ein diese umgebender Ringspalt angeordnet, in welchen das Fluidum einspeisbar ist. Über eine Steuereinrichtung ist der Einspeisevorgang derart ansteuerbar, dass nur beim Hindurchführen des Dübels durch die Auftrageinrichtung Fluidum eingespeist wird. Auf diese Weise wird ein unnötiges Beaufschlagen (wenigstens der obersten Lage) der Bauelemente vermieden.

Vorteilhaft kann es sein, wenn die Auftrageinrichtung bezogen auf die Dübelrichtung unterhalb der Kompressionseinrichtung angeordnet ist. In einer bevorzugten Ausführungsform kann die Pressanordnung wenigstens einen gegen die Arbeitsfläche verschiebbar gelagerten Pressbalken aufweisen. Dieser Pressbalken erstreckt sich somit quer zur Arbeitsflächen-Längsrichtung.

Besonders vorteilhaft kann es sein, wenn die Pressanordnung zwei parallele und in einem Abstand zueinander verlaufende Pressbalken aufweist, wobei zwischen den Pressbalken ein Bohrkopf einer Bohreinheit und/oder ein Stössel einer Dübeleinheit durchführbar sind. Eine solche Anordnung gewährleistet eine besonders günstige Verteilung des Pressdrucks während dem Bohr- und/oder Verdübelungsvorgang.

Der Pressbalken kann auf beiden Seiten in einer Lageranordnung gelagert sein, wodurch gewährleistet ist, dass beide Enden des Pressbalkens gleichzeitig zum Verschieben heb- und senkbar sind.

Am Pressbalken kann jeweils zur Schonung der obersten Lage des Schichtverbundelements ein Anschlagelement aus Holz oder einem anderen Material angeordnet sein. Für eine gleichmässige Kraftverteilung und/oder zum Ausgleich unterschiedlicher Höhen der Lagen können hierzu auf dem Pressbalken auch Kompensationsmittel angeordnet sein. Kompensationsmittel könnten beispielsweise Kissen, Profile aus elastischem Material oder Schläuche (z.B. mit Luft gefüllte Gummischläuche) über die Breite sein, die sich auf der Pressanordnung in Querrichtung erstrecken.

Zum Erzeugen von schräg verlaufenden Dübeln kann eine Kippanordnung vorgesehen sein, mit welcher die Pressanordnung in eine Schräglage zur Arbeitfläche verstellbar ist. Selbstverständlich wäre es auch vorstellbar, in einer Kipplage voreingestellte Bohreinheiten und/oder Dübeleinheiten auf der Pressanordnung vorzusehen.

Die Bohreinheit und die Dübeleinheit können unabhängig voneinander auf der Pressanordnung verschiebbar ausgebildet sein. Dank dieser Anordnung ist die Möglichkeit einer flexiblen Gestaltung der Bearbeitungsvorgänge gegeben.

Eine solche Dübeleinheit könnte auch für sich allein Gegenstand einer Erfindung bilden. Eine Kombination mit der beschriebenen Pressanordnung ist nicht zwingend erforderlich.

Der Verschiebemechanismus zum Verschieben der Pressanordnung in Längsrichtung, zum Verschieben der Pressbalken gegen die Arbeitsfläche, zum Verschieben der Bohreinheit auf der Pressanordnung und/oder zum Verschieben der Dübeleinheit auf der Pressanordnung in Querrichtung kann jeweils ein Zahnradgetriebe sein. Das Zahnradgetriebe besteht im Wesentlichen aus einem in Verschieberichtung verlaufenden Zahnkranz und einem Zahnrad, das mit diesem in Eingriff steht. Der Antrieb des Zahnrads kann dabei jeweils über einen Elektromotor erfolgen. Selbstverständlich wäre es aber auch denkbar, beispielsweise hydraulische Hubzylinder oder andere Antriebe zu verwenden. Die einzelnen Verschiebemechanismen sind dabei vorteilhaft selbstfahrend auszugestalten.

Die Antriebe für die genannten Verschiebemechanismen können vorteilhaft auf der Pressanordnung angeordnet werden, wodurch die Pressanordnung autark ausgebildet wäre. Vorteilhaft kann es auch sein, wenn beispielsweise ein Tank für das Fluidum der Pressanordnung zugeordnet ist. Auf diese Weise könnte die Vorrichtung im Wesentlichen autark betrieben werden.

Die Dübeleinheit kann weiterhin ein Dübelmagazin zur Aufnahme einer Vielzahl von Dübeln aufweisen. Die Dübel können im Dübelmagazin in waagrechter Lage aufbewahrbar sein, wodurch der Einfüllvorgang vereinfacht werden kann. Über eine Rüttelanordnung können die im Dübelmagazin aufbewahrten Dübel vereinzelt werden. Mittels eines pneumatisch aktivierbaren Aufrichthebels kann ein vereinzelter, sich noch in waagrechter Lage befindlicher Dübel in eine gewünschte Dübelrichtung gebracht werden.

Beidseitig an der Pressanordnung, insbesondere beidseits am Pressbalken, können zum Heben und Senken Hubspindeln (statt einem Zahnradgetriebe) auch angeordnet sein, wobei die Kraft von einer Seite zur andern über eine Welle übertragbar ist.

Die vorgängig beschriebene Dübeleinheit kann auch für sich alleine für die Herstellung von Schichtverbundelementen Vorteile gegenüber bekannten Vorrichtungen zur Herstellung von Schichtverbundelementen aufweisen. Eine Kombination mit einer erfindungsgemässen Pressanordnung ist deshalb nicht unbedingt erforderlich.

Weitere Einzelmerkmale und Vorteile der Erfindung ergeben sich aus der nachfolgenden Beschreibung eines Ausführungsbeispiels und aus den Zeichnungen. Es zeigen:
- Figur 1: eine perspektivische Darstellung eines Schichtverbundelements mit freigelegten Schichten,
- Figur 2: einen Querschnitt durch ein Schichtverbundelement mit unterschiedlich eingesetzten Dübeln,
- Figur 3: eine schematische Darstellung einer Pressanordnung zum Zusammenpressen von Lagen eines Schichtverbundelements,
- Figur 4: eine schematische Darstellung des Bohrvorgangs unter Aufrechterhaltung der Pressung,
- Figur 5: eine schematische Darstellung des Einsetzen eines Dübels unter Aufrechterhaltung der Pressung,
- Figur 6: eine perspektivische Darstellung einer erfindungsgemässen Vorrichtung zum Herstellen eines Schichtverbundelements,
- Figur 7: eine Seitenansicht der Vorrichtung gemäss Fig. 6 mit einer Dübeleinheit,
- Figur 8: eine Vorderansicht der Vorrichtung gemäss Fig. 6 mit einer Dübeleinheit und zwei Bohreinheiten
- Figur 9: die Vorrichtung gemäss Fig. 7 mit einer gekippten Dübeleinheit in einer ersten Kippstellung,
- Figur 10: die Vorrichtung gemäss Fig. 7 mit einer Dübeleinheit in einer zweiten Kippstellung,
- Figur 11: eine perspektivische Darstellung einer Bohreinheit,
- Figur 12: eine perspektivische Darstellung einer Dübeleinheit aus einem ersten Betrachtungswinkel,
- Figur 13: die Dübeleinheit gemäss Fig. 12 aus einem zweiten Betrachtungswinkel",
- Figur 14: die Dübeleinheit gemäss Fig. 12 aus einem dritten Betrachtungswinkel,
- Figur 15: eine schematische Darstellung einer Methode zur Verdichtung eines Dübels,
- Figur 16: eine perspektivische Darstellung einer Kompressionseinrichtung zur Durchführung der Methode gemäss Fig. 15,
- Figur 17: eine Darstellung einer Auftrageinrichtung zur Beaufschlagung eines Dübels mit einem Fluidum (Schnitt A-A gemäss Fig. 18),
- Figur 18: eine perspektivische Darstellung der Auftrageinrichtung gemäss Fig. 17,
- Figur 19: ein Zusammenbau der Kompressionseinrichtung gemäss Fig. 16 und der Auftrageinrichtung gemäss Fig. 17 im Querschnitt,
- Figur 20: die schematische Darstellung eines Dübels beim Verdichten gemäss einer alternativen Methode,
- Figur 21: die schematische Darstellung eines Dübels beim Beaufschlagen eines Dübels mit einem Fluidum gemäss einer alternativen Methode,
- Figur 22: eine schematische Darstellung eines Prägerades zum Einprägen von Mulden, und
- Figur 23: eine schematische Darstellung von zwei Lagen sich kreuzender Hölzer beim Schichtaufbau.

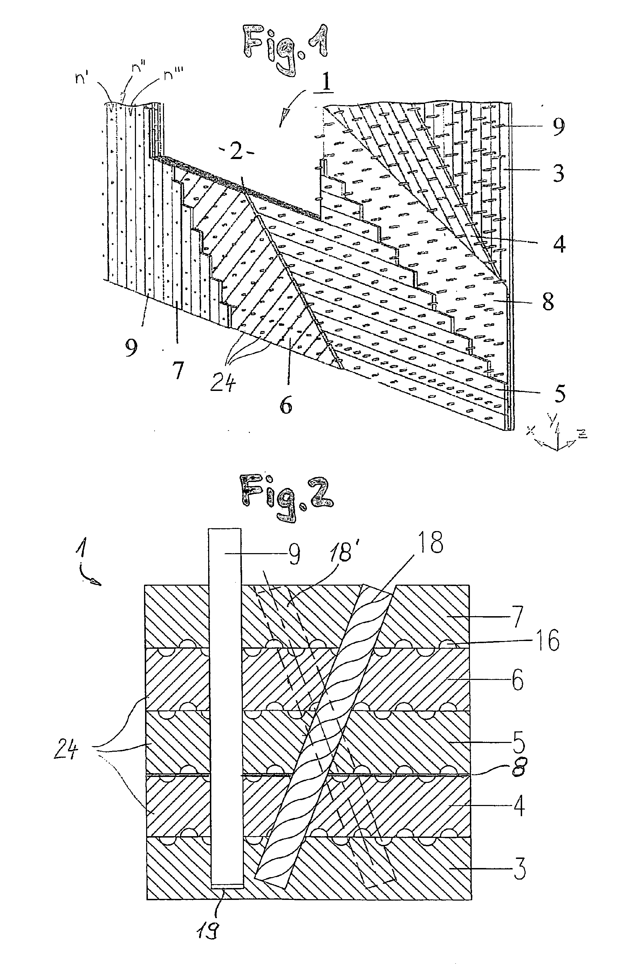

Wie in Figur 1 dargestellt, besteht ein insgesamt mit 1 bezeichnetes Schichtverbundelement aus insgesamt 5 verschiedenen Lagen 3 bis 7. Das Schichtverbundelement ist mit einem Fensterausschnitt 2 versehen. Jede Lage besteht aus unmittelbar nebeneinander angeordneten brettartigen Hölzern 24, wobei die Hölzer der benachbarten Lagen in unterschiedlichen Richtungen verlaufen.
Die erste Lage 3 und die fünfte Lage 7 sind jeweils als Aussenlagen ausgebildet und könnten beispielsweise aus einem anderen Holz bestehen und/oder eine feinere Oberflächenbearbeitung aufweisen. Als Bauelemente werden insbesondere Hölzer eingesetzt. Bauelemente können aber auch aus anderen Werkstoffen bestehen. Insbesondere andere cellulosehaltige oder holzartige Werkstoffe wie z.B. Bambus, Weichfaserplatte oder dergleichen eignen sich als Bauelemente. Sämtliche Lagen werden durch Dübel 9 zusammengehalten, welche vorzugsweise in einem regelmässigen Muster eingesetzt sind. Die einzelnen Hölzer können seitlich durch Nut und Kamm bzw. durch Nut- und Federverbindungen aneinander liegen.

Optional kann zwischen den Hölzern wenigstens eine Zwischenschicht angeordnet werden. Eine solche Zwischenschicht 8 ist in den Figuren 1 und 2 zwischen der zweiten Lage 4 und der dritten Lage 5 angeordnet. Sie kann eine dampfdiffusionsfähige Zwischenschicht 8, beispielsweise aus Filz sein. Derartige Zwischenschichten sind (wie auch die muldenartigen Vertiefungen auf den Oberflächen der Hölzer, vgl. Fig. 2) jedoch nicht zwingend vorzusehen.

Figur 2 zeigt einen vergrösserten Querschnitt durch die vorgehend erwähnten insgesamt fünf Lagen 3 bis 7. Wie dargestellt, können die Dübel 9 im rechten Winkel zu den einzelnen Lagen eingetrieben sein, wobei die Bohrlöcher 19 die erste Lage 3 nicht vollständig durchdringen. Es ist aber auch eine kreuzweise Anordnung der Dübel möglich, wie dies durch die Dübel 18, 18' angedeutet ist. Bei einer derartigen Anordnung wird ersichtlicherweise eine formschlüssige Verbindung der einzelnen Lagen erzielt. Der Dübel 18 ist mit einer schraubenlinienförmigen Profilierung auf der Aussenseite versehen, welche das Eintreiben erleichtert und die Auszugswerte der Dübel weiter erhöht. Derartige Dübel sind an sich bereits seit langem bekannt und beispielsweise bereits in der FR 2 301 441 beschrieben. Wie dargestellt, durchdringen die Dübel auch die Zwischenschicht 8. Selbstverständlich könnte auch dieser Dübel eine etwa glatte Oberfläche ausweisen.

Aus Figur 2 ist ferner ersichtlich, dass die einander zugewandten Oberflächen der Hölzer 24 mit muldenartigen Vertiefungen versehen sind. Im Verbund bilden diese Vertiefungen geschlossene Taschen, in denen Luft eingeschlossen ist. Die muldenartigen Vertiefungen dienen zur Verbesserung der Wärmedämmung des Schichtverbundelements. Je nach Verwendungszweck des Schichtverbundelements kann - wie vorgängig erwähnt - auf das Vorsehen derartiger Vertiefungen verzichtet werden.

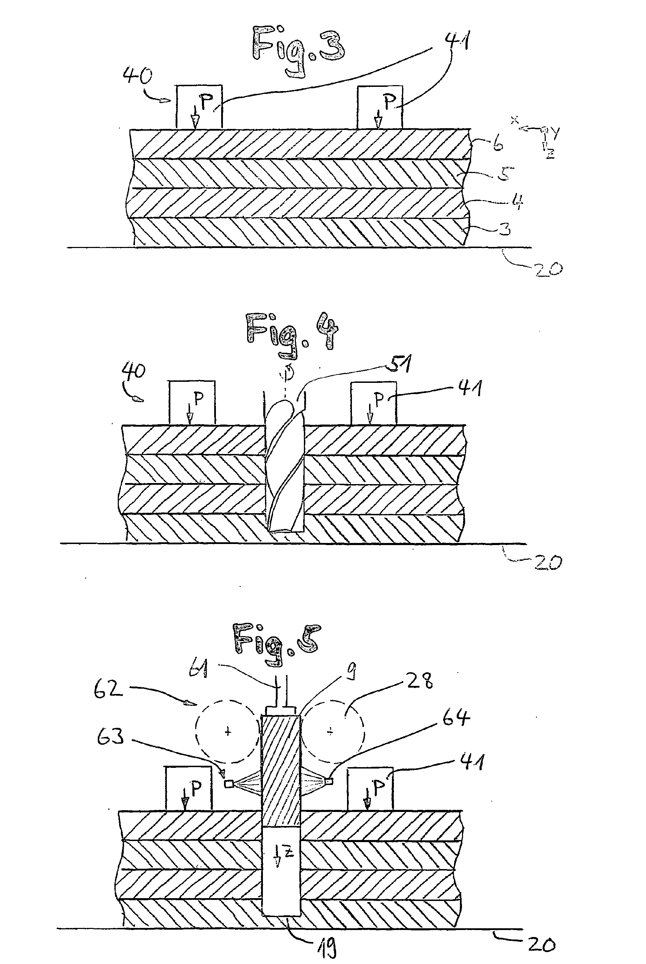

In den Fig. 3 bis 5 ist stark schematisiert ein Verfahrensablauf zur Herstellung des Schichtverbundelements 1 mit den drei Bearbeitungsschritten Pressen, Bohren, Dübel einsetzen dargestellt.

Wie aus Fig. 3 hervorgeht, werden nach dem Auslegen der Lagen 3 bis 6 diese mittels einer Pressanordnung 40 einem Pressdruck P unterworfen. Die Pressanordnung 40 enthält ersichtlicherweise zwei in y-Richtung sich erstreckende Pressbalken 41, die jeweils gegen die oberste Lage 6 drücken. Diese Pressung wird so lange aufrechterhalten, bis der wenigstens ein Dübel einer Gruppe im Schichtverbundelement eingesetzt ist. Fig. 4 zeigt einen entsprechenden Bohrvorgang zur Herstellung eines Bohrloches. Ersichtlicherweise wird der Bohrkopf 51 zwischen den Pressbalken 41 durchgeführt. Der in Fig. 4 beispielhaft dargestellte Schlangenbohrer kann durch andere geeignete Bohrertypen ersetzt werden. Besonders geeignet können Bohrer sein, die derart ausgestaltet sind, dass sie eine Gewindestruktur in der Lochwandung erzeugen können. Nach der Bohrung wird, wie Fig. 5 zeigt, der Dübel 9 mittels eines Stössel 61 in das Bohrloch 19 eingesetzt.

In den Fig. 3 bis 5 erfolgen die jeweiligen Arbeitsschritte b von oben nach unten bzw. in vertikaler Richtung. Es wäre zum Beispiel aber auch vorstellbar, in umgekehrter Richtung (d.h. von unten nach oben) zu bohren und/oder die Dübel einzusetzen.

Die Pressanordnung 40 bzw. die Pressbalken 41 können sich in y-Richtung erstrecken. Eine derartige Konfiguration ermöglicht es, dass reihenweise eine sequentielle Verdübelung durchgeführt werden kann. Solche nebeneinander liegende Reihen von Verbindungsstellen sind in Fig. 1 durch n' bis n''' angedeutet. Ersichtlicherweise verlaufen diese Reihen n in y-Richtung, d.h. quer in einem rechten Winkel zur Längsrichtung x (zur besseren Verständlichkeit ist hierzu in den Figuren 1, 3 und 6 ein kartesisches Koordinatensystem angedeutet). Zwischen den einzelnen Reihen wird die Pressung durch Anheben der Pressanordnung bzw. Pressbalken in (-z)-Richtung gelöst, wodurch die Pressanordnung von einer Reihe zur nächsten verschoben werden kann. Dann werden die vorgenannten Bearbeitungsschritte (Pressen, Bohren, Dübel einsetzen) wiederholt. Selbstverständlich wäre es theoretisch auch denkbar, anstatt Reihen andere Gruppenzusammenstellungen vorzunehmen.

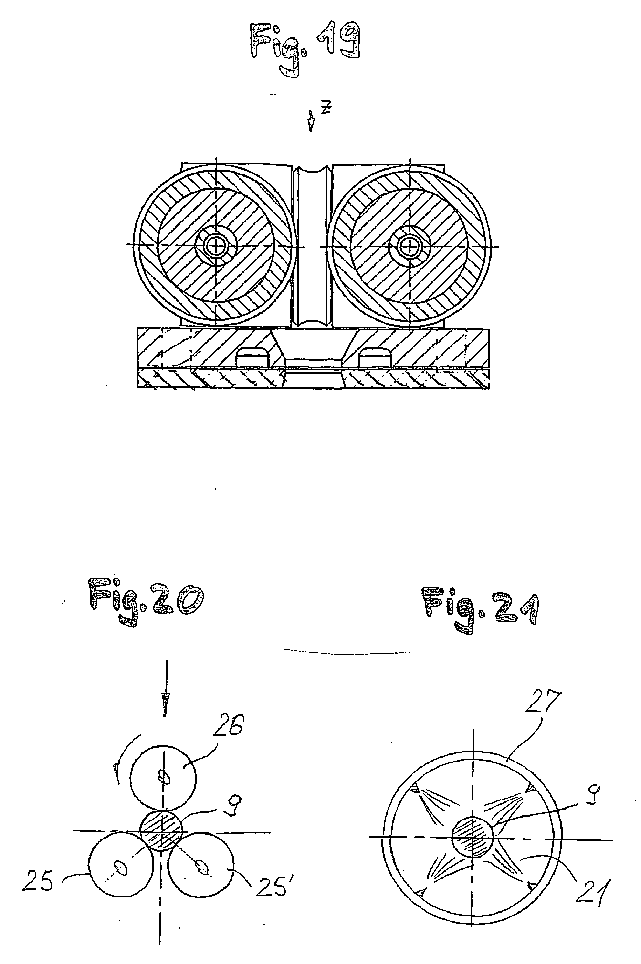

Wie weiterhin aus Fig. 5 hervorgeht, kann in den Verdübelungsvorgang eine Verdichtung des Dübels 9 im Durchmesser und eine Beaufschlagung des Dübels 9 mit einem Fluidum integriert werden. Diese letztgenannten beiden Schritte erfolgen während des Stossvorgangs in z-Richtung beim Einsetzen des Dübels mittels des Stössels 61 in das Bohrloch 19. Zur Verdichtung wird der Dübel 9 dabei zwischen Presswalzen 28 durchgeführt. Selbstverständlich sind auch andere Kompressionseinrichtungen denkbar (vgl. Fig. 20), beispielsweise ein Durchstossen durch eine Matrize. Das Fluidum wird unmittelbar nachfolgend mittels (z.B.) Sprühdüsen 64 auf die Dübeloberfläche aufgetragen. In diesem vorbearbeiteten Zustand wird der Dübel in das Bohrloch 19 eingeführt, dessen Durchmesser derart auf den verdichteten Dübel abgestimmt ist, dass sich der Dübel bei einer Wiederausdehnung im Bohrloch verspannt. Als Fluidum kann beispielsweise ein Gleitmittel eingesetzt werden, das wegen der Reduktion der Reibung beim Einpressen die Einführung der Dübel erleichtert. Als Fluidum besonders geeignet ist dabei Wasser, dem verschiedene Zusatzstoffen beigemischt werden können. Als Zusatzstoffe könnten Lösungsmittel wie beispielsweise Ameisensäure verwendet werden. Auch Sand könnte zugesetzt werden. Es ist aber auch vorstellbar, als Fluidum ein Haftmittel zu verwenden oder ein Haftmittel Wasser beizufügen, das die Verbindungswirkung der Dübel weiter erhöhen kann. Als Haftmittel kommen beispielsweise Leime oder auf natürlichen Stoffen basierende Haftmittel wie Leime, Melasse, Kasein, Gluten etc. in Betracht. Das Verdichten des Dübels und/oder die Beaufschlagung des Dübels mit dem Fluidum könnte für bestimmte Anwendungszwecke aber auch weggelassen werden.

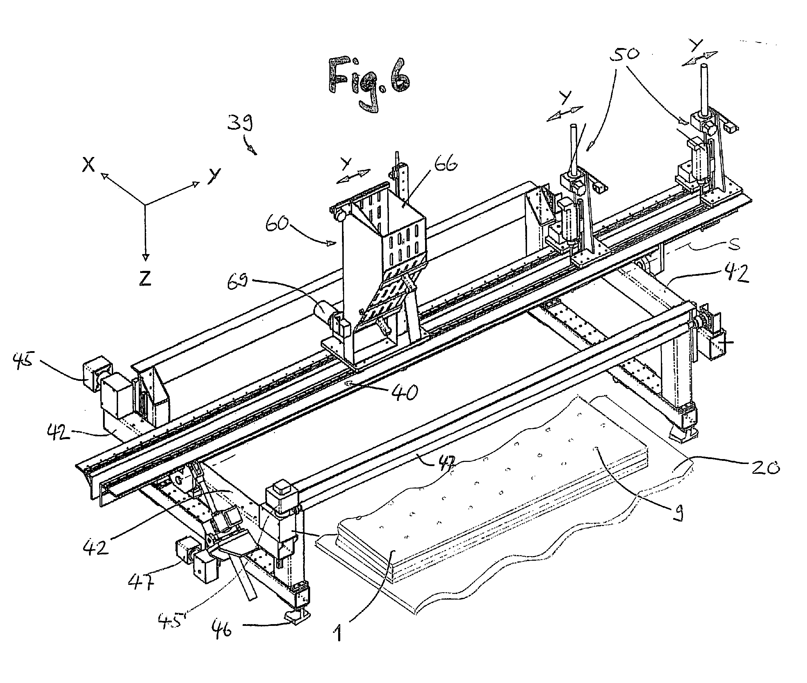

Fig. 6 zeigt eine Ausgestaltung einer mit 39 bezeichneten Vorrichtung zur Herstellung eines Schichtverbundelements 1. Mit solchen Vorrichtungen können Schichtverbundelemente bis zu einer Länge (x-Richtung) von 12 m und einer Breite (y-Richtung) von 3.5 m hergestellt werden. Selbstverständlich wären aber auch grössere Dimensionen denkbar. Die Vorrichtung verfügt eine Pressanordnung 40 zum Zusammenpressen der ausgelegten Lagen für ein Schichtverbundelement. Die Pressanordnung 40 weist zwei parallele und in y-Richtung sich erstreckende Pressbalken 41 auf, mit welchen das Schichtverbundelement 1 in z-Richtung gegen die Arbeitsfläche 20 pressbar ist. Die Pressbalken 41 sind beidseitig auf einem Trägerteil 42 abgestützt und in z-Richtung heb- und senkbar. Die Verschiebung in z-Richtung erfolgt über ein Zahnradgetriebe, wobei für den Antrieb zwei simultan antreibbare Elektromotoren 45 und 45' sorgen.

Auf der Pressanordnung 40 bzw. auf den Pressbalken 41 sind eine Dübeleinheit 60 sowie zwei Bohreinheiten 50 verschiebbar angeordnet. Die Dübeleinheit 60 und die Bohreinheiten 50 sind auf Schlitten befestigt, entlang Schienen geführt und angetrieben von Elektromotoren über ein Zahnradgetriebe jeweils einzeln in y-Richtung verschiebbar auf der Pressanordnung bewegbar. Durch die Verwendung zweier oder mehrerer Bohreinheiten kann der Verfahrensablauf beschleunigt werden. Denkbar ist jedoch auch der Einsatz bloss einer Bohreinheit. Selbstverständlich ist es auch denkbar, - statt einer Dübeleinheit - eine Mehrzahl von Dübeleinheiten vorzusehen. Weiterhin ist ein mit 69 gekennzeichneter Motor erkennbar, mit dessen Hilfe die Dübel in der Dübeleinheit vereinzelbar sind.

Der Verfahrensablauf mit den Bearbeitungsschritten Bohren und Einsetzen der Dübel kann flexibel ausgestaltet werden. So könnten beispielsweise zuerst alle Bohrlöcher einer Reihe gebohrt werden und erst dann die Dübel eingesetzt werden. Vorteilhaft kann es aber auch sein, wenn sofort nach einem einzelnen Bohrprozess gedübelt wird. Im vorliegenden Beispiel mit den zwei Bohreinheiten werden (z.B.) jeweils entsprechend zwei Bohrlöcher gebohrt und diese dann nacheinander verdübelt, wonach diese Verfahrenschritte bis zur Fertigstellung der Reihe wiederholt werden.

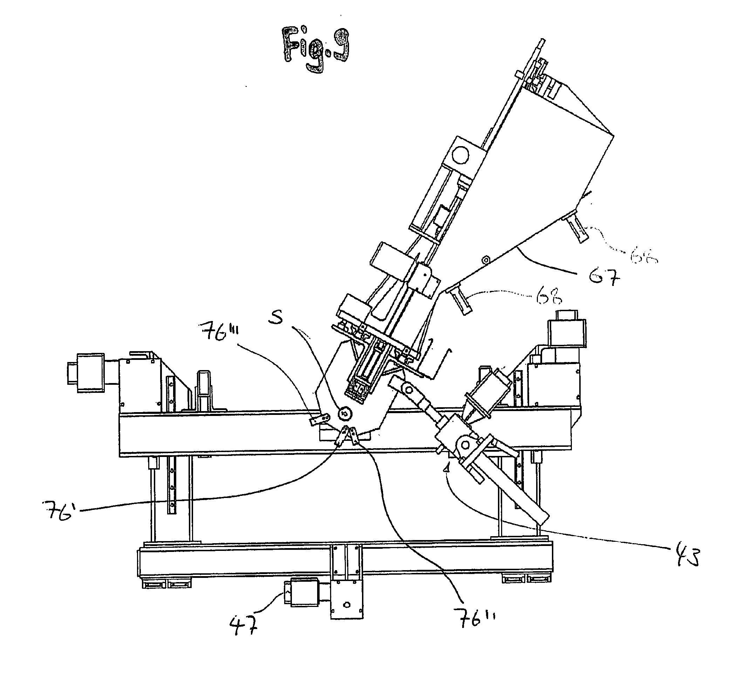

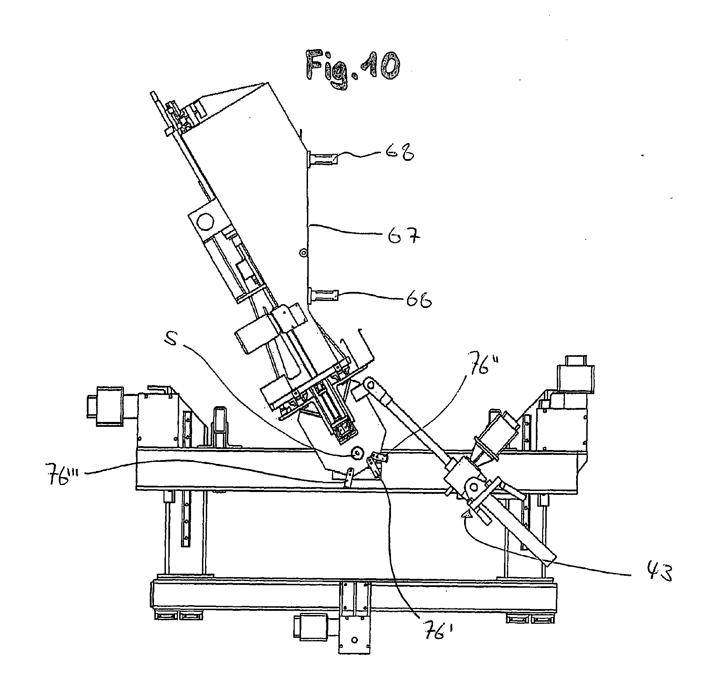

Wie aus Fig. 6 weiterhin hervorgeht, ist die Pressanordnung 40 schwenkbar am Rahmenteil 42 befestigt (die Schwenkachse S verläuft in y-Richtung). Zum Schwenken bzw. Kippen der gesamten Anordnung mit der Pressanordnung 40 zusammen mit den Bohr- und Dübeleinheiten ist eine Kippanordnung 43 mit einem Hubzylinder 44 vorgesehen, mit welcher verschiedene Kippstellungen erreichbar sind. Selbstverständlich könnte statt des Hubzylinders auch eine Hubspindel verwendet werden. Zwei verschiedene Kippstellungen sind in den nachfolgenden Figuren 9 und 10 dargestellt. Einfachere Vorrichtungen 1 benötigen solche Kippanordnungen in der Regel nicht. In den einfacheren Ausführungen wäre die Pressanordnung fix mit den Trägerteilen verbunden.

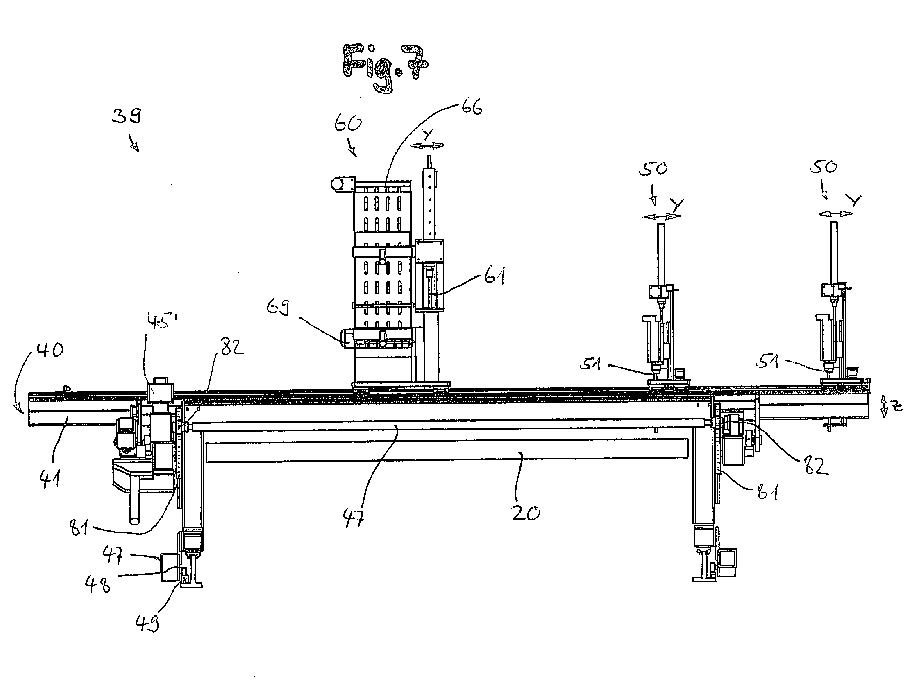

Die gesamte Vorrichtung 1 ist auf Längsschienen 46 in x-Richtung, d.h. in einer Arbeitflächen-Längsrichtung, bewegbar. Ein Motor 47 hierzu für den Antrieb ist in Fig. 6 erkennbar. Auch für diese longitudinale Verschiebung kann ein Zahnradgetriebe verwendet werden. Derartige Längsschienen können über eine gesamte Hallenlänge verlegt werden. In grösseren Hallen können somit mehrere nebeneinander liegende Schichtverbundelemente gefertigt werden. In Fig. 7 ist ein Zahnradgetriebe erkennbar, es besteht im Wesentlichen aus einer in x-Richtung sich erstreckenden Zahnstange 49 und einem mit diesem in Eingriff stehenden Zahnrad 48.

Aus Fig. 7 ist weiter die Zahnradgetriebe-Anordnung für die Hub-Senkbewegung der Pressanordnung 40 erkennbar. Diese besteht im Wesentlichen aus in z-Richtung sich erstreckenden Zahnstangen 81 und zugehörigen Zahnrädern 82. Dabei sind die beiden Seiten zur Kraftübertragung durch die Welle 47 miteinander verbunden.

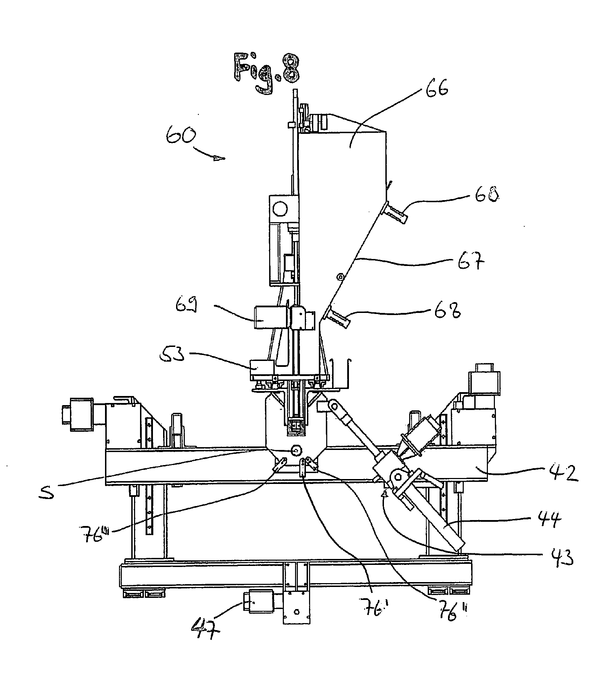

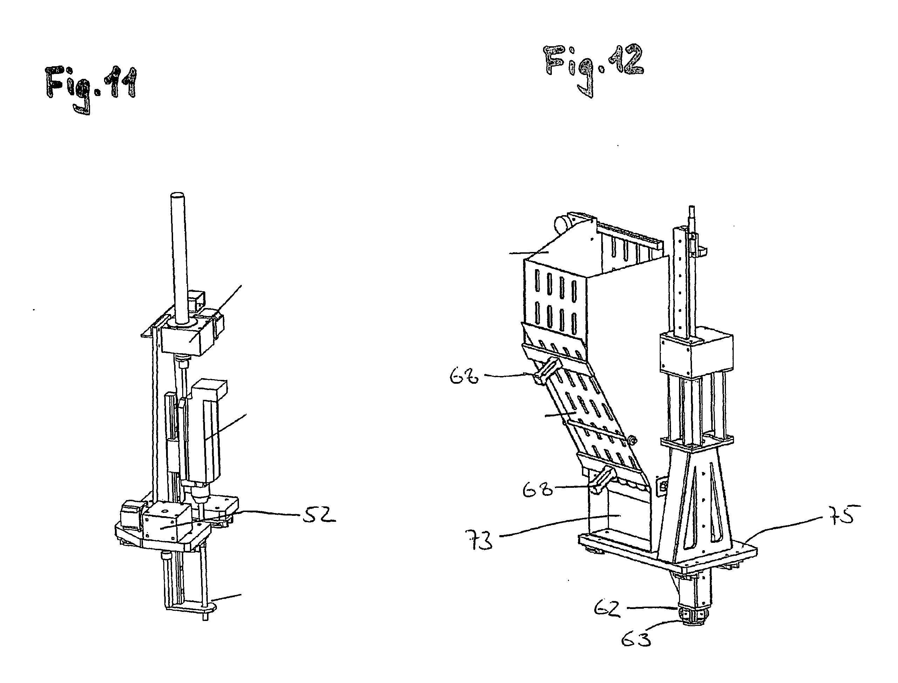

In den Fig. 8 bis 10 sind Seitenansichten der Dübeleinheit 60 in verschiedenen Positionen dargestellt. In den Fig. 12 bis 14 sind weiter Details der Dübeleinheit 60 erkennbar. Eine solche Dübeleinheit (Fig. 12 bis 14) könnte auch in konventionellen Vorrichtungen für die Herstellung von Schichtverbundelementen eingesetzt werden (insb. also ohne Pressanordnung 40). Weiterhin sind an der Pressanordnung angebrachte Elemente 76', 76" und 76''' erkennbar, die zum Festlegen einer jeweiligen Endlage dienen (Referenz der Drehachse bzw. Schwenkachse).

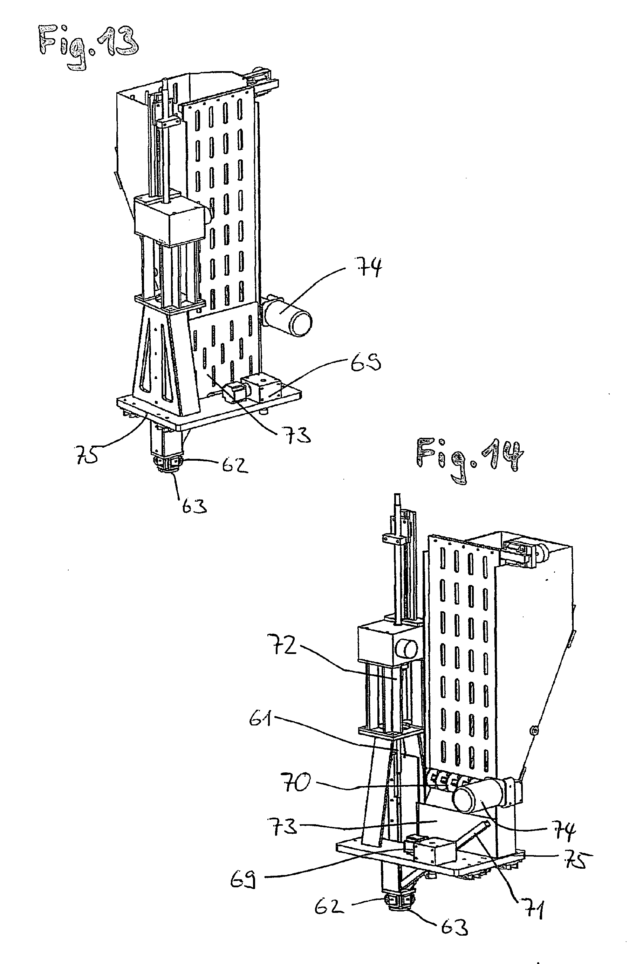

Die Dübeleinheit 60 verfügt über ein Dübelmagazin 66, in welches Dübel von oben in einer horizontalen Lage einlegbar sind. Das Dübelmagazin 66 ist seitlich durch eine Rüttelplatte 67 verschlossen. Durch Rütteln oder Vibrieren der Rüttelplatte mittels eines oberen und unteren Rüttelzylinders 68 können die Dübel leichter vereinzelt werden. Selbstverständlich könnte auch ein einziger Rüttelzylinder genügen. Über einen durch einen Motor anntreibbaren Förderrevolver 70 werden die Dübel schliesslich vereinzelt und werden durch eine Fallbewegung im Dübelschacht 73 auf einen in Ruheposition schräg angeordneten Aufstellhebel 71 abgelegt (Fig. 14; in Fig. 13 ist der Dübelschacht geschlossen dargestellt, in Fig. 14 ist der Dübelschacht - zu Informationszwecken - teilweise offen). Der pneumatisch aktivierbare Aufstellhebel 71 wird dann durch eine Schwenkbewegung in eine Dübelposition gebracht. Der Dübel kann danach in Dübelrichtung (bei nicht gekippten Pressanordnungen: in z-Richtung) über den Stössel 61 in ein entsprechendes Bohrloch eingesetzt werden. Die Einsetzbewegung erfolgt mit Hilfe einer elektrisch antreibbaren Spindel 72. Für die Einsetzbewegung könnten auch pneumatische oder hydraulische Systeme eingesetzt werden. Die Einsetzbewegung ist über eine CNC-Achse steuerbar. In Fig. 8 ist weiterhin ein Elektromotor 53 erkennbar, mit welchem die Dübeleinheit 60 auf der Pressanordnung hin und her verschiebbar ist.

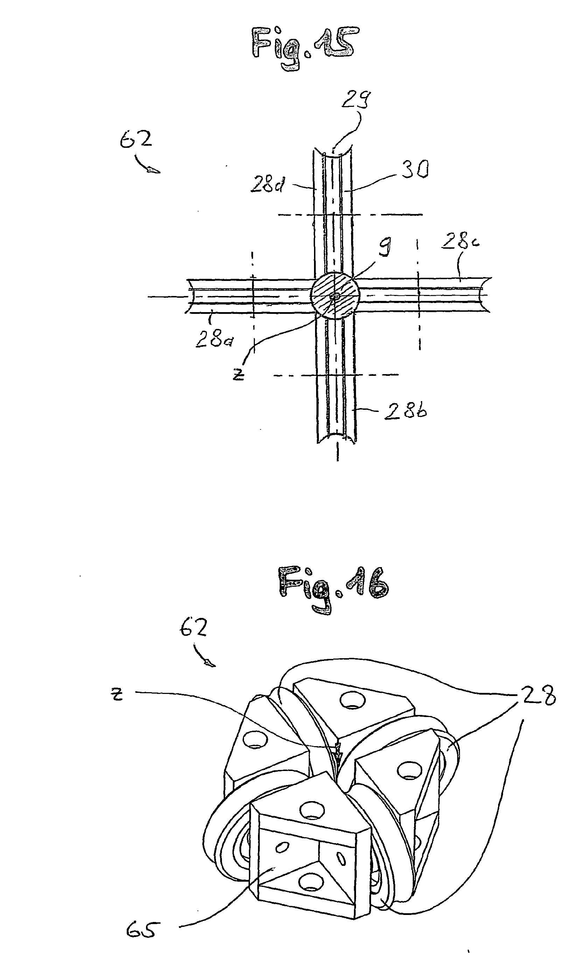

Weiterhin ist in den Fig. 12 bis 14 eine Kompressionseinrichtung 62 und eine Auftrageinrichtung 63 erkennbar, durch welche ein Dübel bei der Stossbewegung des Stössels durchgeführt wird. Diese Komponenten sind ersichtlicherweise unterhalb des Schlittens 75 an diesem befestigt und bezogen auf die Pressbalken zwischen diesen angeordnet. Die genaue Wirkungsweise dieser Komponenten wird anhand der Fig. 15 bis 22 detailliert erläutert.

In Fig. 15 ist eine Methode zur Verdichtung eines Dübels 9 dargestellt. Der Dübel wird dabei von insgesamt vier Presswalzen 28a, 28b, 28c, 28d beaufschlagt, deren Drehachsen im rechten Winkel zur Längsmittelachse des Dübels 9 verlaufen. Die mit 29 bezeichneten Walzenstirnseiten sind konvex gekrümmt ausgebildet, wobei die Krümmung etwa dem Dübelradius entspricht. Auf den Mantelflächen 29 der Presswalzen sind ausserdem Rippen 30 angeordnet, welche an der Dübeloberfläche parallele Rillen verursachen. Die Presswalzen sind gegen das Zentrum des Dübels vorgespannt und drehen sich gleichsinnig, sodass ein Dübel durch das Walzenquartett hindurch geführt und dabei verdichtet wird. Der Dübel wird dabei zwischen den Presswalzen abgerollt und um ein paar zehntel Millimeter verdichtet.

In Fig. 16 ist eine Kompressionseinrichtung 62 nach der Methode gemäss Fig. 15 dargestellt, bei welcher die Presswalzen 28 in der Draufsicht in einer Kreuzkonfiguration angeordnet sind. Weiterhin sind hier Befestigungselemente 65 erkennbar, in welchen die Presswalzen 28 frei drehbar gelagert sind. Die Befestigungselemente 65 weisen Bohrungen zur Aufnahme von Befestigungsschrauben auf zum Befestigen in der Dübeleinheit auf. Sie dienen auch zur Befestigung einer (nicht gezeigten) Auftrageinrichtung (vgl. insb. nachfolgende Fig. 20).

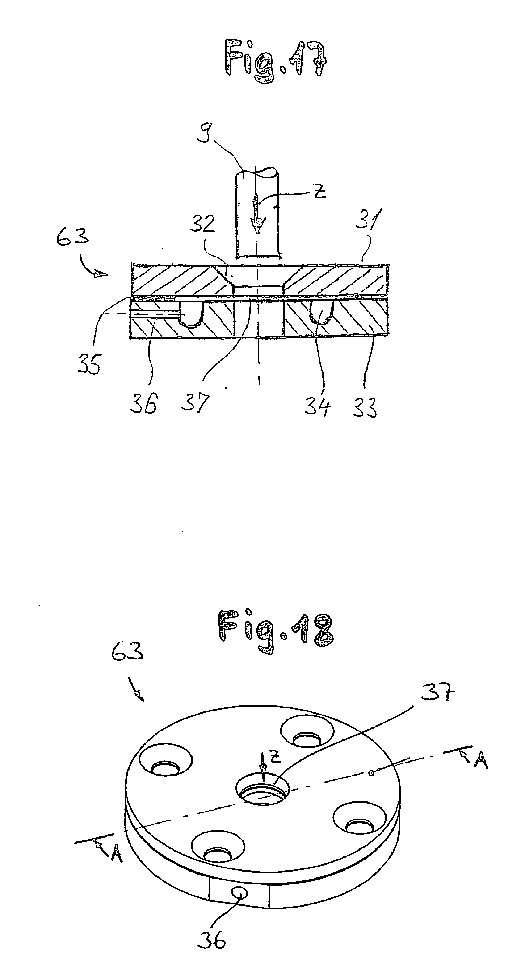

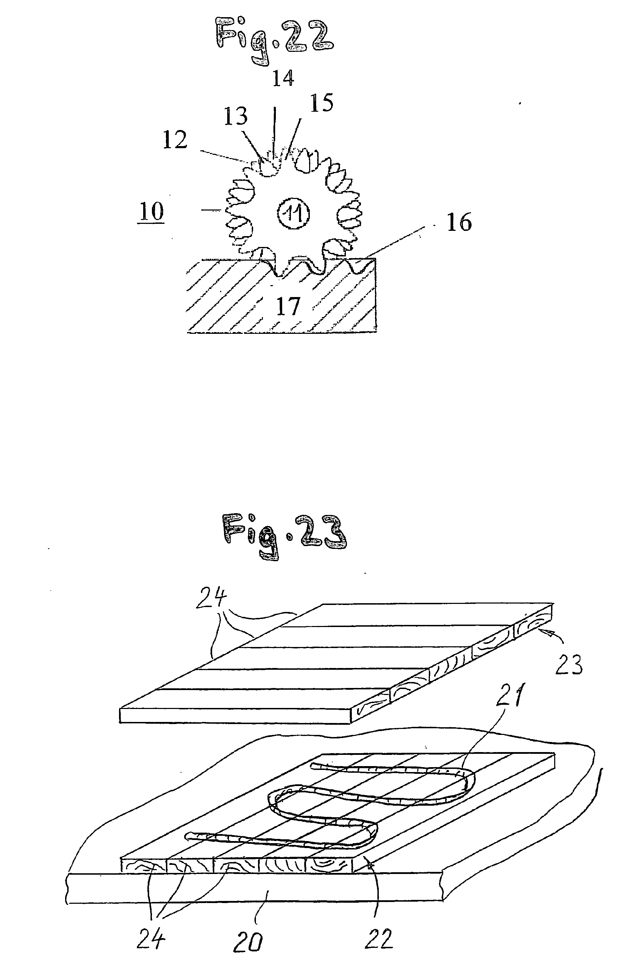

In Fig. 17 ist eine Methode für die Oberflächenbeschichtung eines Dübels zur Beaufschlagung mit einem Fluidum dargestellt. Der Dübel wird dabei nicht besprüht (vgl. dazu Fig. 5 oder Fig. 22), sondern mit einem Flüssigfilm beschichtet. Die Auftrageinrichtung 63 besteht aus einer Einführplatte 31, welche eine Einführöffnung 32 für den Dübel 9 aufweist. Eine Kanalplatte 33 ist derart gegen die Einführplatte 31 gepresst, dass ein die Einführöffnung 32 umgebender Ringspalt 37 verbleibt. Dieser Ringspalt mündet aussen in einen Ringkanal 34, der mittels einer Dichtung 35 abgedichtet ist. Über einen Zufuhrkanal 36 kann das Fluidum in den Ringkanal 34 eingespeist werden, das von dort aus als Film gegen die Einführöffnung 32 gepresst wird. Ein durch die Einführöffnung durchgeschobener Dübel 9 wird so ersichtlicherweise vollständig über seine gesamte Manteloberfläche mit dem Fluidum beschichtet. Eine derartige Anordnung ist aber auch besonders geeignet für zähflüssige Flüssigkeiten, die sich nicht aus einer Sprühdüse ausstossen lassen. Eine solche Anordnung gewährleistet, dass auch die Enden der Dübel befeuchtet werden, wodurch ein besseres und schnelleres Aufquellen der Dübel erzielt wird.

Aus Fig. 18 ist erkennbar, dass die Auftrageinrichtung 63 eine scheibenförmige Konfiguration hat. Die weiter in Fig. 18 erkennbaren Befestigungslöcher dienen zur Befestigung der Auftrageinrichtung an die Kompressionseinrichtung (vgl. Fig. 20).

Ein Zusammenbau der Kompressionseinrichtung 62 und der Auftrageinrichtung 63 ist in Fig. 19 gezeigt. Ersichtlicherweise können mit dieser Anordnung Dübel unmittelbar aufeinander folgend verdichtet und dann mit dem Fluidum beaufschlagt (bzw. beschichtet) werden.

Wie aus Fig. 20 ersichtlich ist, können die Dübel vor dem Einsetzen auch auf andere Weise in ihrem Durchmesser verdichtet werden. Ein Dübel 9 liegt dabei im Zwickel zwischen zwei Lagerwalzen 25 und 25' und wird von einer angetriebenen Presswalze 26 beaufschlagt. Es wäre aber auch denkbar, dass alle Presswalzen angetrieben sind. Die Walzen könnten konisch oder gewindeartig ausgebildet sein, wodurch ein Vorschub des Dübels in z-Richtung erreichbar wäre (nicht gezeigt).

Gemäss Figur 21 kann ein Dübel 9 zum Beaufschlagen mit dem Fluidum durch eine Ringdüse 27 geführt werden, wo er mit flüssigem Haftmittel 21 besprüht wird. In diesem vorbearbeiteten Zustand wird der Dübel in das Bohrloch 19 eingeführt, dessen Durchmesser derart auf den verdichteten Dübel abgestimmt ist, dass sich der Dübel bei einer Wiederausdehnung im Bohrloch verspannt.

Fig. 22 zeigt eine Seitenansicht einer Prägewalze 10, mit welcher die in Fig. 2 dargestellten Mulden an den einzelnen Bretter 17 angebracht werden können. Die Prägewalze besteht aus einer Vielzahl von mit einzelnen Zähnen versehenen Prägerädern 12 bis 15, welche auf einer Welle 11 sitzen. Die Zähne der einzelnen Räder sind jeweils versetzt zueinander angeordnet. Breite, Konfiguration und Eindringtiefe der einzelnen Zähne können je nach Verwendungszweck variieren. Das Einprägen der Mulden bewirkt gleichzeitig eine Verdichtung und einen teilweisen Bruch von Holzfasern. Das Prägen der Vertiefungen erfolgt abgestimmt auf den Nutzungszweck auf einer Durchlaufmaschine, ähnlich einer Dickenhobelmaschine. Die einzelnen Hölzer werden dabei einseitig, wahlweise zweiseitig bearbeitet. Das teilweise Durchtrennen der Fasern hat den Vorteil, dass sich diese bei einer allfälligen Feuchtigkeitsaufnahme nicht wieder aufrichten können.

Wie in Figur 23 dargestellt, werden die Hölzer lagenweise auf einer Arbeitsfläche 20 gestapelt. Dargestellt ist hier eine erste Rohlage 22, auf welche eine zweite Rohlage 23 abgelegt werden soll. Zur besseren Fixierung der Lagen kann es vorteilhaft sein, wenn nach der Ablage der ersten Rohlage 22 mit einer geeigneten Dispenservorrichtung ein flüssiges oder pastöses Haftmittel, beispielsweise Melasse, derart verteilt wird, dass auf jedem einzelnen Holz in bestimmten Bereichen eine Teilmenge des Haftmittels 21 vorhanden ist. Ein mäanderartiger Auftrag hat sich dabei als vorteilhaft erwiesen. Anschliessend werden die Hölzer der zweiten Rohlage 23 auf die erste Rohlage 22 abgesetzt, wobei sich ersichtlicherweise das Haftmittel 21 wenigstens teilweise zu einem dünnen Film verteilt. Durch Erschütterungen oder geringfügige Krafteinwirkungen ist jetzt eine Verschiebung der beiden Lagen relativ zueinander erschwert. Beim Einlegen der oben erwähnten Zwischenschicht wird genau gleich verfahren, das heisst auch die Zwischenschicht wird zunächst mit Haftmittel fixiert und anschliessend wird wiederum die Oberfläche der Zwischenschicht mit Haftmittel beschichtet. Nach dem Aufbau der letzten Lage erfolgt die Verdübelung gemäss oben genannten Verfahrenschritten.

## Patentansprüche

1. Verfahren zum Herstellen eines Schichtverbundelements (1) aus mehreren Lagen (3 - 5) von Bauelementen (24), wobei wenigstens zwei benachbarte Lagen in Verbindungsstellen mit Dübeln durchsetzt sind,
- durch Zusammenpressen der Lagen wenigstens im Bereich einer Verbindungsstelle,
- durch Bohren eines Bohrlochs (19) in der verbindungstelle mittels wenigstens einer Bohreinheit
- und durch Einsetzen eines Dübels (9, 18) in das Bohrloch,
- wobei während dem Bohren und dem Einbringen des Dübels die Pressung aufrechterhalten wird,
**dadurch gekennzeichnet,**
- **dass** die Lagen zuerst auf einer Arbeitsfläche ausgelegt werden,
- **dass** die Pressung mit einer Pressanordnung (40) durchgeführt wird, welche die Lagen gegen die Arbeitsfläche presst,
- **dass** mit der Bohreinheit eine Gruppe von wenigstens zwei Bohrlöchern gebohrt wird,
- wobei die Bohreinheit für jede Bohrung auf der Pressanordnung verschoben wird,
- und wobei je Gruppe die Pressung aufrechterhalten wird,
- und **dass** die Pressanordnung anschliessend zum sequentiellen Pressen von einer Gruppe zur nächsten Gruppe bewegt wird.

2. Verfahren nach Anspruch 1, **dadurch gekennzeichnet, dass** auf der Arbeitsfläche mehrere Lagen von Bauelementen von nebeneinander angeordneten, länglichen brettartigen Hölzern ausgelegt werden, wobei die Bauelemente von zwei benachbarten Lagen unterschiedliche Richtungen aufweisen.

3. Verfahren nach Anspruch 2, **dadurch gekennzeichnet, dass** zwischen den Hölzern wenigstens eine vorzugsweise dampfdiffusionsfähige Zwischenschicht angeordnet wird.

4. Verfahren nach einem der Ansprüche 1 bis 3, **dadurch gekennzeichnet, dass** der Dübel (9, 18) vor dem Einsetzen in das Bohrloch (19) im Durchmesser mechanisch verdichtet wird.

5. Verfahren nach Anspruch 4, **dadurch gekennzeichnet, dass** der Dübel (9, 18) vor dem Einsetzen in das Bohrloch (19) mit einem Fluidum, vorzugsweise mit Wasser, beaufschlagt wird.

6. Verfahren nach Anspruch 4 und 5, **dadurch gekennzeichnet, dass** der Dübel (9, 18) unmittelbar nach dem verdichtungsVorgang mit dem Fluidum beaufschlagt wird.

7. Verfahren nach einem der Ansprüche 1 bis 6, **dadurch gekennzeichnet, dass** die Gruppen durch quer zu einer Arbeitsflächen-Längsrichtung (x) verlaufende, nebeneinander angeordnete Reihen von Verbindungsstellen gebildet sind.

8. Verfahren nach Anspruch 7, **dadurch gekennzeichnet, dass** zum Erzeugen von reihenweisen Verbindungsstellen die ausgelegten Lagen mit Hilfe einer quer zur Arbeitsflächen-Längsrichtung (x) sich erstreckenden Pressanordnung (40) zusammengepresst werden, unter Aufrechterhaltung der Pressung in die Reihe Bohrlöcher (19) gebohrt und Dübel (9, 18) eingesetzt werden, die Pressung aufgelöst und dass sodann die Pressanordnung (40) zur nachfolgenden Reihe verschoben wird und die vorgenannten Bearbeitungsschritte wiederholt werden.

9. Verfahren nach einem der Ansprüche 1 bis 8, **dadurch gekennzeichnet, dass** als Bohrloch ein Sackloch (19) gebohrt wird, wodurch die Dübel (9, 18) eine aussen liegende Lage nur teilweise durchdringen

10. Verfahren nach einem der Ansprüche 1 bis 9, **dadurch gekennzeichnet, dass** wenigstens eine Reihe mit schräg verlaufenden Dübeln (18) versehen wird.

11. Verfahren nach einem der Ansprüche 1 bis 10, **dadurch gekennzeichnet, dass** die Dübel mittels einer Dübeleinheit (60) mit einem Stössel in die Bohrlöcher eingesetzt werden, wobei die Dübeleinheit ebenfalls auf der Pressanordnung verschoben wird.

12. Vorrichtung zum Herstellen eines Schichtverbundelements (1) aus mehreren Lagen (3 - 7) von Bauelementen, wobei wenigstens zwei benachbarte Lagen in Verbindungsstellen mit Dübeln durchsetzt sind,
- mit einer Pressanordnung (40) zum Zusammenpressen der Lagen, mit welcher die gesamte Breite des Schichtverbundelements einem Pressdruck unterwerfbar ist,
- wobei die Pressanordnung mittels eines Verschiebemechanismus in einer Arbeitsflächen-Längsrichtung (x) verschiebbar ist,
- sowie mit wenigstens einer Bohreinheit (50) mit einem Bohrkopf (51) zum Bohren von Bohrlöchern (19),
**dadurch** gekennezeichnet,
- dass wenigstens eine Dübeleinheit (60) mit einem Stössel (61) zum Einsetzen von Dübeln (9, 18) in die Bohrlöcher vorgesehen ist,
- und dass die Bohreinheit und die Dübeleinheit verschiebbar auf der Pressanordnung (40) angeordnet sind,
- wobei die Lagen mit der Pressanordnung gegen eine Arbeitsfläche pressbar sind.

13. Vorrichtung nach Anspruch 12, **dadurch gekennzeichnet, dass** die Dübeleinheit (60) eine Kompressionseinrichtung (62) zum mechanischen Verdichten der Dübel (9, 18) im Durchmesser aufweist.

14. Vorrichtung nach Anspruch 13, **dadurch gekennzeichnet, dass** die Kompressionseinrichtung wenigstens zwei Presswalzen (26) aufweist, deren Drehachsen rechtwinklig zur Dübelrichtung verlaufen, wobei die Dübel (9, 18) zwischen den Presswalzen hindurch führbar sind.

15. Vorrichtung nach einem der Ansprüche 12 bis 14, **dadurch gekennzeichnet, dass** die Dübeleinheit (60) eine Auftrageinrichtung (63) zum Beaufschlagen der Dübel (9, 18) mit einem Fluidum aufweist.

16. Vorrichtung nach Anspruch 15, **dadurch gekennzeichnet, dass** die Auftrageinrichtung (63) Sprühdüsen (64) enthält, die vorzugsweise auf einem Ring angeordnet sind.

17. Vorrichtung nach Anspruch 16, **dadurch gekennzeichnet, dass** die Auftrageinrichtung (63) ein scheibenförmiges Auftragelement mit einer Einführöffnung (32) zum Hindurchführen der Dübel (9, 18) ist, die einen die Einführöffnung (32) umgebenden Ringspalt (37) aufweist, in welchen das Fluidum einspeisbar ist.

18. Vorrichtung nach einem der Ansprüche 15 bis 17, **dadurch gekennzeichnet, dass** die Auftrageinrichtung (63) bezogen auf die Dübelrichtung unterhalb der Kompressionseinrichtung (62) angeordnet ist.

19. Vorrichtung nach einem der Ansprüche 12 bis 18, **dadurch gekennzeichnet, dass** die Pressanordnung (40) wenigstens einen gegen die Arbeitsfläche (20) verschiebbar gelagerten Pressbalken (41) aufweist.

20. Vorrichtung nach einem der Ansprüche 12 bis 19, **dadurch gekennzeichnet, dass** die Pressanordnung (40) zwei parallele und in einem Abstand zueinander verlaufende Pressbalken (41) aufweist, wobei zwischen den Pressbalken (41) ein Bohrkopf (51) einer Bohreinheit (50) und/oder ein Stössel (61) einer Dübeleinheit (60) durchführbar ist.

21. Vorrichtung nach einem der Ansprüche 12 bis 20, **dadurch gekennzeichnet, dass** jeweils eine Kippanordnung (43) vorgesehen ist, mit welcher die Bohreinheit (50) und/oder die Dübeleinheit (60) in eine Schräglage zur Senkrechten (z) zur Arbeitsfläche (20) verstellbar ist.

22. Vorrichtung nach einem der Ansprüche 12 bis 21, **dadurch gekennzeichnet, dass** die Bohreinheit (50) und die Dübeleinheit (60) unabhängig voneinander auf der Pressanordnung (40) verschiebbar ausgebildet sind.

23. Vorrichtung nach einem der Ansprüche 12 bis 22, **dadurch gekennzeichnet, dass** der Verschiebemechanismus zum Verschieben der Pressanordnung (40) in Längsrichtung (x), zum Verschieben der Pressbalken (41) gegen die Arbeitsfläche (20), zum Verschieben der Bohreinheit (50) auf der Pressanordnung (40) in Querrichtung (y) und/oder zum Verschieben der Dübeleinheit (60) auf der Pressanordnung (40) in Querrichtung (y) jeweils ein Zahnradgetriebe ist.

## Claims

1. Method for manufacturing a laminated element (1) consisting of a plurality of plies (3-5) of construction elements (24), dowels passing through at least two adjacent plies at connecting points,
- by pressing together the plies at least in the region of a connecting point,
- by drilling a drill hole (19) at the connecting point by means of at least one drilling unit,
- and by inserting a plug (9, 18) into the drill hole,
- the pressing being maintained during the drilling and the placing of the plug,
**characterized**
- **in that** the plies are first laid out on a work surface,
- **in that** the pressing is carried out using a pressing arrangement (40) which presses the plies against the work surface,
- **in that** a group of at least two drill holes is drilled using the drilling unit,
- the drilling unit being displaced for each drilling on the pressing arrangement,
- and the pressing being maintained for each group,
- and **in that** the pressing arrangement is then moved for sequential pressing from one group to the next group.

2. Method according to Claim 1, **characterized in that** a plurality of plies of elongated board-like wooden construction elements arranged next to one another are laid out on the work surface, the construction elements of two adjacent plies having different directions.

3. Method according to Claim 2, **characterized in that** at least one preferably vapour-diffusible intermediate layer is arranged between the wooden elements.

4. Method according to one of Claims 1 to 3, **characterized in that** the dowel (9, 18) is mechanically compressed in diameter before being inserted into the drill hole (19).

5. Method according to Claim 4, **characterized in that** a fluid, preferably water, is applied to the dowel (9, 18) before insertion into the drill hole (19).

6. Method according to Claims 4 and 5, **characterized in that** the fluid is applied to the dowel (9, 18) directly after the compressing operation.

7. Method according to one of Claims 1 to 6, **characterized in that** the groups are formed by rows of connecting points running transversely to a work-surface longitudinal direction (x) and arranged next to one another.

8. Method according to Claim 7, **characterized in that**, to build connecting points in rows, the laid-out plies are pressed together by means of a pressing arrangement (40) extending transversely to the work-surface longitudinal direction (x), the row of drill holes (19) is drilled and dowels (9, 18) are inserted while the pressing is maintained, and the pressing is neutralized, and **in that** the pressing arrangement (40) is displaced to the following row and the abovementioned processing steps are repeated.

9. Method according to one of Claims 1 to 8, **characterized in that** a blind hole (19) is drilled as drill hole, as a result of which the dowels (9, 18) only partly pass through an outer ply.

10. Method according to one of Claims 1 to 9, **characterized in that** at least one row is provided with obliquely running dowels (18).

11. Method according to one of Claims 1 to 10, **characterized in that** the dowels are inserted into the drill holes by means of a dowels unit (60) having a plunger, the dowels unit likewise being displaced on the pressing arrangement.

12. Apparatus for manufacturing a laminated element (1) consisting of a plurality of plies (3-7) of construction elements, plugs passing through at least two adjacent plies at connecting points,
- having a pressing arrangement (40) for pressing the plies together, with which pressing arrangement the entire width of the laminated element can be subjected to an applied pressure,
- the pressing arrangement being displaceable in a work-surface longitudinal direction (x) by means of a displacement mechanism,
- and having at least one drilling unit (50) with a drill head (51) for drilling drill holes (19),
**characterized**
- **in that** at least one dowel unit (60) having a plunger (61) for inserting dowels (9, 18) into the drill holes is provided,
- and **in that** the drilling unit and the dowel unit are arranged such as to be displaceable on the pressing arrangement (40),
- it being possible for the plies to be pressed against a work surface by the pressing arrangement.

13. Apparatus according to Claim 12, **characterized in that** the dowel unit (60) has a compression device (62) for mechanically compressing the dowels (9, 18) in diameter.

14. Apparatus according to Claim 13, **characterized in that** the compression device has at least two pressing rollers (26), the rotation axes of which run at right angles to the dowel direction, it being possible for the dowels (9, 18) to be passed through between the pressing rollers.

15. Apparatus according to one of Claims 12 to 14, **characterized in that** the dowel unit (60) has an application device (63) for applying a fluid to the dowels (9, 18).

16. Apparatus according to Claim 15, **characterized in that** the application device (63) contains spray nozzles (64) which are preferably arranged on a ring.

17. Apparatus according to Claim 16, **characterized in that** the application device (63) is a disc-shaped application element having an insertion opening (32) for passing the dowels (9, 18) through, said insertion opening (32) having an annular gap (37) which surrounds it and into which the fluid can be fed.

18. Apparatus according to one of Claims 15 to 17, **characterized in that** the application device (63) is arranged below the compression device (62) with respect to the dowel direction.

19. Apparatus according to one of Claims 12 to 18, **characterized in that** the pressing arrangement (40) has at least one pressing beam (41) mounted such as to be displaceable towards the work surface (20).

20. Apparatus according to one of Claims 12 to 19, **characterized in that** the pressing arrangement (40) has two parallel pressing beams (41) running at a distance from one another, it being possible for a drill head (51) of a drilling unit (50) and/or a plunger (61) of a dowel unit (60) to be passed through between the pressing beams (41).

21. Apparatus according to one of Claims 12 to 20, **characterized in that** in each case a tilting arrangement (43) is provided, by means of which the drilling unit (50) and/or the dowel unit (60) can be shifted into an oblique position relative to the perpendicular (z) to the work surface (20).

22. Apparatus according to one of Claims 12 to 21, **characterized in that** the drilling unit (50) and the dowel unit (60) are designed to be displaceable independently of one another on the pressing arrangement (40).

23. Apparatus according to one of Claims 12 to 22, **characterized in that** the displacement mechanism for displacing the pressing arrangement (40) in the longitudinal direction (x), for displacing the pressing beams (41) towards the work surface (20), for displacing the drilling unit (50) on the pressing arrangement (40) in the transverse direction (y) and/or for displacing the dowel unit (60) on the pressing arrangement (40) in the transverse direction (y) is in each case a gear drive.

## Revendications

1. Procédé de fabrication d'un élément stratifié (1) composé de plusieurs couches (3 - 5) de composants (24), au moins deux couches voisines étant introduites dans les points de jonction avec des chevilles ;
- par compression des couches au moins dans la zone d'un point de jonction ;
- par alésage d'un trou d'alésage (19) dans le point de jonction à l'aide d'au moins une unité d'alésage ;
- et par insertion d'une cheville (9, 18) dans le trou d'alésage ;
- le serrage étant maintenu pendant l'alésage et l'insertion de la cheville ;
**caractérisé en ce que** :
- les couches sont d'abord étendues sur une surface de travail ;
- le serrage est réalisé à l'aide d'un dispositif de serrage (40) qui serre les couches contre la surface de travail ;
- un groupe d'au moins deux trous d'alésage est percé avec l'unité d'alésage ;
- l'unité d'alésage étant déplacée pour chaque alésage sur le dispositif de serrage ;
- et le serrage étant maintenu pour chaque groupe ;
- et **en ce que** le dispositif de serrage est ensuite déplacé d'un groupe à l'autre pour le serrage séquentiel.

2. Procédé selon la revendication 1, **caractérisé en ce que** plusieurs couches de composants de boisage de type planche disposés côte à côte sont étendues sur la surface de travail, les composants comportant deux couches voisines disposées dans des directions différentes.

3. Procédé selon la revendication 2, **caractérisé en ce qu'**au moins une couche intermédiaire pouvant de préférence diffuser la vapeur est disposée entre les boisages.

4. Procédé selon l'une quelconque des revendications 1 à 3, **caractérisé en ce que** la cheville (9, 18) est rendue étanche de façon mécanique sur son diamètre avant l'insertion dans le trou d'alésage (19).

5. Procédé selon la revendication 4, **caractérisé en ce que** la cheville (9, 18) est chargée avec un fluide, de préférence avec de l'eau, avant l'insertion dans le trou d'alésage (19).

6. Procédé selon la revendication 4 et 5, **caractérisé en ce que** la cheville (9, 18) est chargée avec le fluide directement après le processus d'étanchéification.

7. Procédé selon l'une quelconque des revendications 1 à 6, **caractérisé en ce que** les groupes sont formés transversalement par rapport à des rangées disposées côte à côte et s'étendant dans une direction longitudinale de la surface de travail (x).

8. Procédé selon la revendication 7, **caractérisé en ce que** pour produire des points de jonction en rangées, les couches étendues sont comprimées à l'aide d'un dispositif de serrage (40) s'étendant dans la direction longitudinale de la surface de travail (x), le serrage étant maintenu dans la rangée où les trous d'alésage (19) sont percés et où les chevilles (9, 18) sont insérées, avant de relâcher le serrage puis de déplacer le dispositif de serrage (40) jusqu'à la rangée suivante et de répéter les étapes d'usinage précédemment citées.

9. Procédé selon l'une quelconque des revendications 1 à 8, **caractérisé en ce que** le trou d'alésage percé est un trou borgne (19), la cheville (9, 18) ne pénétrant que partiellement une couche extérieure.

10. Procédé selon l'une quelconque des revendications 1 à 9, **caractérisé en ce qu'**au moins une rangée est pourvue d'une cheville (18) oblique.

11. Procédé selon l'une quelconque des revendications 1 à 10, **caractérisé en ce que** la cheville est insérée dans les trous d'alésage avec un poussoir, à l'aide d'une unité chevilleuse (60), l'unité chevilleuse étant également déplacée sur le dispositif de serrage.

12. Dispositif de fabrication d'un élément stratifié (1) composé de plusieurs couches (3 - 7) de composants, au moins deux couches voisines étant introduites dans les points de jonction avec des chevilles ;
- avec un dispositif de serrage (40) servant à la compression des couches et permettant de soumettre l'ensemble de la largeur de l'élément stratifié à une pression de compression ;
- le dispositif de serrage pouvant être déplacé dans une direction longitudinale de la surface de travail (x) à l'aide d'un mécanisme de déplacement ;
- ainsi qu'avec au moins une unité d'alésage (50) dotée d'une tête d'alésage (51) pour l'alésage des trous d'alésage (19) ;
**caractérisé en ce que** :
- au moins une unité chevilleuse (60) est pourvue d'un poussoir (61) pour l'insertion des chevilles (9, 18) dans les trous d'alésage ;
- et **en ce que** l'unité d'alésage et l'unité chevilleuse sont disposées de façon mobile sur le dispositif de serrage (40) ;
- les couches pouvant être serrées contre une surface de travail avec le dispositif de serrage.

13. Dispositif selon la revendication 12, **caractérisé en ce que** l'unité chevilleuse (60) comporte un dispositif de compression (62) pour étanchéifier mécaniquement la cheville (9, 18) sur son diamètre.

14. Dispositif selon la revendication 13, **caractérisé en ce que** le dispositif de compression comporte au moins deux rouleaux compresseurs (26) dont les axes de rotation sont perpendiculaires à la direction de la cheville, la cheville (9, 18) pouvant être guidée entre les rouleaux compresseurs.

15. Dispositif selon l'une quelconque des revendications 12 à 14, **caractérisé en ce que** l'unité chevilleuse (60) comporte un dispositif d'application (63) pour le chargement des chevilles (9, 18) à l'aide d'un fluide.

16. Dispositif selon la revendication 15, **caractérisé en ce que** le dispositif d'application (63) contient des buses de pulvérisation (64) disposées de préférence sur une bague.

17. Dispositif selon la revendication 16, **caractérisé en ce que** le dispositif d'application (63) est un élément d'application en forme de disque avec une ouverture d'introduction (32) pour le guidage de la cheville (9, 18) et qui comporte une fente annulaire (37) entourant l'ouverture d'introduction (32) dans laquelle le fluide peut être amené.

18. Dispositif selon l'une quelconque des revendications 15 à 17, **caractérisé en ce que** le dispositif d'application (63) est disposé en dessous du dispositif de compression (62) par rapport à la direction de la cheville.

19. Dispositif selon l'une quelconque des revendications 12 à 18, **caractérisé en ce que** le dispositif de serrage (40) comporte au moins une mâchoire de serrage (41) disposée contre la surface de travail (20).

20. Dispositif selon l'une quelconque des revendications 12 à 19, **caractérisé en ce que** le dispositif de serrage (40) comporte deux mâchoires de serrage (41) parallèles et séparées l'une de l'autre d'une certaine distance, une tête d'alésage (51) d'une unité d'alésage (50) et/ou un poussoir (61) d'une unité chevilleuse (60) pouvant être introduits entre les mâchoires de serrage (41).

21. Dispositif selon l'une quelconque des revendications 12 à 20, **caractérisé en ce qu'**un dispositif de basculement (43) est respectivement prévu pour amener l'unité d'alésage (50) et/ou l'unité chevilleuse (60) dans une position inclinée par rapport à la perpendiculaire (z) à la surface de travail (20).

22. Dispositif selon l'une quelconque des revendications 12 à 21, **caractérisé en ce que** l'unité d'alésage (50) et l'unité chevilleuse (60) sont réalisées indépendamment l'une de l'autre sur le dispositif de serrage (40).

23. Dispositif selon l'une quelconque des revendications 12 à 22, **caractérisé en ce que** le mécanisme de déplacement prévu pour le déplacement du dispositif de serrage (40) dans la direction longitudinale (x), pour le déplacement des mâchoires de serrage (41) contre la surface de travail (20), pour le déplacement de l'unité d'alésage (50) sur le dispositif de serrage (40) dans la direction transversale (y) et/ou pour le déplacement de l'unité chevilleuse (60) sur le dispositif de serrage (40) dans la direction transversale (y) est respectivement un engrenage.
